# EUROPÄISCHE PATENTANMELDUNG

(11) **EP 3 220 151 A1**
(43) Veröffentlichungstag der Anmeldung: **20.09.2017**
(21) Anmeldenummer: 16160298.2
(22) Anmeldetag: 15.03.2016
(51) Int. Cl.: G01N 35/10

(54) **SYSTEM ZUR SCHAUMZERSTÖRUNG IN EINEM ABFALLBEHÄLTER EINES AUTOMATISCHEN ANALYSEGERÄTS**

(71) Anmelder: Siemens Healthcare Diagnostics Products GmbH, 35041 Marburg (DE)
(72) Erfinder: Bouteffah-Touiki, Ayoub, 60431 Frankfurt am Main (DE)

(57) **Zusammenfassung**

Die vorliegende Erfindung betrifft ein System zur Schaumzerstörung in einem Abfallbehälter für Flüssigabfälle in einem automatischen Analysegerät. Das System umfasst einen Sammelbehälter (31) zum Sammeln von gebrauchter, tensidhaltiger Waschlösung und einen weiteren Behälter (33) zum Lagern einer Entschäumer-Lösung (34), der über eine steuerbare Dosiervorrichtung (36) mit dem Sammelbehälter (31) verbunden ist.

## Beschreibung

Die vorliegende Erfindung liegt auf dem Gebiet der automatischen Analysegeräte und betrifft ein System zur Schaumzerstörung in einem Abfallbehälter für Flüssigabfälle.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für die Reinigung verschiedener Funktionseinheiten eines Analysegerätes ist die Verwendung tensidhaltiger Waschlösungen erforderlich. Pipettiernadeln müssen beispielsweise nach jedem Kontakt mit einer Reagenz- oder Probenflüssigkeit gereinigt werden. Dazu sind in dem Analysegerät häufig Waschstationen vorgesehen, die kontinuierlich mit frischer Waschlösung versorgt werden. An den Waschstationen sind üblicherweise ein Anschluss für die Zufuhr von Waschlösung und Anschluss für die Entleerung der Waschstation angeschlossen. Der Anschluss für die Entleerung verbindet die Waschstation über einen Schlauch mit einem Sammelbehälter zum Sammeln von gebrauchter Waschlösung. Damit das Analysegerät über einen möglichst langen Zeitraum unbeaufsichtigt betrieben werden kann, wird die Waschlösung je nach Auslegung des Analysegeräts in 0,2 bis 2 Liter fassenden Behältern vorrätig gehalten. Der Flüssigkeitsabfall wird in Behältern gesammelt, die etwa zwischen 5 und 20 Liter fassen.

Um frühzeitig erkennen zu können, ob der maximale Füllstand in einem Abfallbehälter erreicht wird, sind in oder an den Abfallbehältern üblicherweise Füllstandsensoren angebracht, wie zum Beispiel Schwimmer, deren Höhe bestimmt wird. Besonders bevorzugt sind kapazitive Füllstandsensoren, die an der Außenseite des Behälters angebracht sind, weil sie eine nicht-invasive und überdies sehr präzise Messung des Füllstandes einer Flüssigkeit im Behälterinneren ermöglichen. Ein derartiger Füllstandsensor ist beispielsweise in EP-A1-2400275 beschrieben. Der Füllstandsensor umfasst u.a. mehrere Elektroden, die eine Messfläche bilden und demgemäß als Sensorfolie ausgestaltet sein können. Die vertikale Ausdehnung der Messfläche definiert den Bereich, in dem verschiedene Füllstände gemessen werden können.

Problematisch ist jedoch, dass es bei der Sammlung von tensidhaltigen Flüssigabfällen in einem Sammelbehälter zu einer beträchtlichen Schaumbildung kommt. Dies hat den Nachteil, dass verschiedene Füllstandsensorsysteme den Füllstand der Flüssigkeit nicht korrekt bestimmen können, weil der Schaum oberhalb der Flüssigkeitsoberfläche als Flüssigkeit detektiert wird. Dies wiederum hat zur Folge, dass ein falsch zu hoher Füllstand in dem Abfallbehälter gemessen wird, und der Betrieb des Analysegeräts unterbrochen wird, weil keine weiteren Reinigungsvorgänge und damit auch keine weiteren Analyseschritte mehr zugelassen werden können, bis ein Benutzer den vermeintlich gefüllten Abfallbehälter gegen einen leeren Behälter ausgetauscht hat.

Die der vorliegenden Erfindung zugrundeliegende Aufgabe besteht darin, ein automatisches Analysegerät, das über mindestens eine Pipettiervorrichtung mit einer Pipettiernadel und mindestens eine Waschstation für Pipettiernadeln verfügt, wobei die Waschstation mit einem Sammelbehälter zum Sammeln von gebrauchter Waschlösung verbunden ist, so zu verbessern, dass unnötige Unterbrechungen des Betriebs des Analysegeräts vermieden werden, die aufgrund einer falsch zu hohen Füllstandbestimmung des Flüssigabfalls in dem Sammelbehälter verursacht werden.

Die Aufgabe wird erfindungsgemäß dadurch gelöst, dass in dem automatischen Analysegerät ein weiterer Behälter zum Lagern einer Entschäumer-Lösung vorgesehen ist, der über eine steuerbare Dosiervorrichtung mit dem Sammelbehälter verbunden ist.

Dies hat den Vorteil, dass über die steuerbare Dosiervorrichtung eine Teilmenge einer Entschäumer-Lösung, die in dem weiteren Behälter enthalten ist, in den Sammelbehälter abgegeben werden kann, so dass im Sammelbehälter enthaltener Schaum entweder zerstört oder die Bildung von Schaum vermieden wird.

Gegenstand der vorliegenden Erfindung ist damit ein automatisches Analysegerät mit mindestens einer Pipettiervorrichtung mit einer Pipettiernadel und mit mindestens einer Waschstation für Pipettiernadeln, wobei die Waschstation mit einem Sammelbehälter zum Sammeln von gebrauchter Waschlösung verbunden ist, wobei ein weiterer Behälter zum Lagern einer Entschäumer-Lösung vorgesehen ist, der über eine steuerbare Dosiervorrichtung mit dem Sammelbehälter verbunden ist.

Die steuerbare Dosiervorrichtung kann eine Pumpe sein, die dazu ausgelegt ist, ein definiertes Volumen Entschäumer-Lösung aus dem Behälter enthaltend die Entschäumer-Lösung anzusaugen und dieses dann in den Sammelbehälter abzugeben.

Alternativ kann die steuerbare Dosiervorrichtung auch als einfaches Sperrventil ausgestaltet sein. Dies bietet sich insbesondere dann an, wenn der Sammelbehälter an eine Vakuumpumpe angeschlossen ist, die ein Vakuum im Sammelbehälter erzeugt, um über einen Zuführungsschlauch gebrauchte Waschlösung und andere Flüssigabfälle anzusaugen. Durch kurzzeitiges Öffnen des Ventils wird eine Teilmenge der Entschäumer-Lösung angesaugt und damit in den Sammelbehälter dosiert.

Vorzugsweise enthält der Behälter zum Lagern der Entschäumer-Lösung einen Entschäumer aus der Gruppe Silikonöle, Tributylphosphat und Triisobutylphosphat.

Vorteilhafterweise ist ferner ein Füllstandsensor zur Bestimmung des Füllstands des Sammelbehälters vorgesehen, zum Beispiel ein Schwimmer, ein System zur Messung der Leitfähigkeit, des Drucks, des Gewichts des Behälters, etc. Bevorzugterweise ist ein kapazitiver Füllstandsensor zur Bestimmung des Füllstands des Sammelbehälters vorgesehen. Der kapazitive Füllstandsensor kann unmittelbar an dem Sammelbehälter angebracht sein. Besonders bevorzugte kapazitive Füllstandsensoren sind folienförmig ausgestaltet und auf der Außenseite des Sammelbehälters aufgeklebt. Der kapazitive Füllstandsensor muss jedoch nicht direkt am Sammelbehälter angebracht sein, sondern kann auch in räumlicher Nähe zum Sammelbehälter angeordnet sein.

Ein erfindungsgemäßes automatisches Analysegerät umfasst vorzugsweise ferner eine Steuereinrichtung, die so konfiguriert ist, dass sie ein Verfahren mit den folgenden Schritten steuert:
- Befüllen der Waschstation mit einer Waschlösung und Waschen der Pipettiernadel;
- Befördern der gebrauchten Waschlösung in den Sammelbehälter,
wobei vor dem Befördern der gebrauchten Waschlösung in den Sammelbehälter zunächst die Dosiervorrichtung betätigt wird, um eine Teilmenge der Entschäumer-Lösung aus dem Behälter zum Lagern der Entschäumer-Lösung in den Sammelbehälter zu befördern.

Dies bewirkt, dass in dem Sammelbehälter bereits eine Menge der Entschäumer-Lösung vorhanden ist, die, wenn nachfolgend eine Menge tensidhaltiger gebrauchter Waschlösung in den Sammelbehälter befördert wird, die Schaumbildung im Behälter unterbindet.

Vorzugsweise ist die Steuereinrichtung so konfiguriert, dass vor jedem Befördern einer gebrauchten Waschlösung in den Sammelbehälter zunächst die Dosiervorrichtung betätigt wird, um eine Teilmenge der Entschäumer-Lösung aus dem Behälter zum Lagern der Entschäumer-Lösung in den Sammelbehälter zu befördern.

Die abwechselnde Beförderung von Entschäumer-Lösung und gebrauchter Waschlösung in den Sammelbehälter hat den Vorteil, dass beide Lösungen zuverlässig durchmischt werden und die Schaumbildung besonders effektiv verhindert wird.

Die Menge der pro Dosiervorgang in den Sammelbehälter abzugebenden Entschäumer-Lösung ist systemspezifisch und in Abhängigkeit von der Art des Entschäumers und des Volumens und des Tensidgehalts der gebrauchten Waschlösung zu wählen.

Wann immer im Zusammenhang mit der vorliegenden Erfindung von einer "Verbindung" zwischen zwei Einheiten, wie z.B. der Verbindung von Waschstation und Sammelbehälter oder der Verbindung des Behälters zum Lagern der Entschäumer-Lösung mit dem Sammelbehälter oder von einem "Anschluss" einer Einheit an eine andere Einheit , wie z.B. dem Anschluss des Sammelbehälters an eine Vakuumpumpe, die Rede ist, ist damit gemeint, dass die Verbindung oder der Anschluss direkt oder über Rohr- oder Schlauchleitungen hergestellt sein kann.

Die Erfindung wird im Folgenden anhand einer Zeichnung erläutert.

### Darin zeigen

- FIG. 1: ein erfindungsgemäßes automatisches Analysegerät;
- FIG. 2: die schematische Darstellung eines Systems zur Schaumzerstörung in einem automatischen Analysegerät.

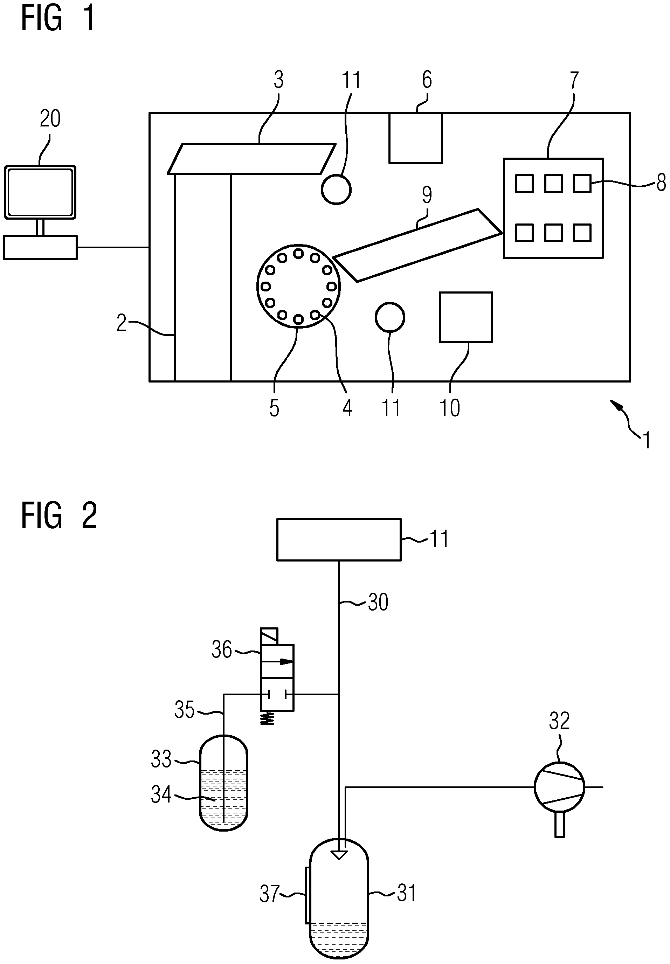

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von einem nicht dargestellten Transferarm mit einem Greifer von der Inkubationseinrichtung 5 in eine photometrische Messeinheit 10 transportiert, wo die Extinktion des Reaktionsansatzes gemessen wird.

Zum Reinigen der Pipettiernadeln der Pipettiervorrichtungen 3, 9 sind zwei Waschstationen 11 vorgesehen. Nach jedem Pipettiervorgang werden die Pipettiervorrichtungen 3, 9 jeweils zu einer Waschstation 11 verfahren, die Pipettiernadel wird abgesenkt und gereinigt. Ein typischer Reinigungsvorgang läuft wie folgt ab: nachdem ein zu transferierendes Proben- oder Reagenzflüssigkeitsvolumen von der Pipettiernadel abgegeben worden ist, wird die Pipettiervorrichtung 3, 9 zu einer Waschstation 11 verfahren, und die Pipettiernadel wird in die Waschstation 11 abgesenkt. Die Waschstation 11 wird mit Hilfe einer Pumpvorrichtung mit Wasser befüllt, so dass grobe Verunreinigungen der Nadelspitze abgespült werden. Damit auch die innere Oberfläche der Pipettiernadel gereinigt wird, wird gegebenenfalls auch Wasser von der Pipettiernadel angesaugt und wieder abgegeben. Anschließend wird die Waschstation 11 durch Absaugen des benutzten Wassers entleert. Dann wird die Waschstation 11 mit einer tensidhaltigen Waschlösung befüllt, und der zuvor beschriebene Reinigungsvorgang der Pipettiernadel wird wiederholt. Die gebrauchte tensidhaltige Waschlösung wird dann aus der Waschstation 11 durch Absaugen entfernt. Die Pipettiernadel wird nochmal mit Wasser gereinigt, um etwaige Reste von Waschlösung von der Nadel abzuspülen. Danach steht die Pipettiernadel für den nächsten Pipettiervorgang zur Verfügung.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 ist die schematische Darstellung eines Systems zur Schaumzerstörung in einem automatischen Analysegerät 1.

Eine Waschstation 11 für Pipettiernadeln ist über einen Schlauch 30 mit einem Sammelbehälter 31 zum Sammeln von gebrauchter Waschlösung verbunden. An den Sammelbehälter 31 ist eine Vakuum-Pumpe 32 angeschlossen, die in dem Sammelbehälter 31 einen Unterdruck erzeugt, so dass die Flüssigabfälle aus der Waschstation 11 in den Sammelbehälter 31 gesaugt werden. Weiterhin ist ein weiterer Behälter 33 mit einer Entschäumer-Lösung 34 vorgesehen. Die Entschäumer-Lösung 34 besteht aus Silikonöl. Der Behälter 33 mit der Entschäumer-Lösung 34 ist über einen Schlauch 35 an den Schlauch 30, der die Waschstation 11 mit dem Sammelbehälter 31 verbindet, angeschlossen. In dem Schlauch 35 ist ein elektrisch regelbares Sperrventil 36 vorgesehen, das den Schlauch 35 üblicherweise verschließt und nur dann, wenn es betätigt wird, den Durchfluss von Entschäumer-Lösung 34 ermöglicht. Vor jedem Reinigungsvorgang in der Waschstation 11 wird das Sperrventil 36 für eine kurze Zeit geöffnet, um mittels des in dem Sammelbehälter 31 und dem Schlauch 30 herrschenden Unterdrucks eine kleine Menge der Entschäumer-Lösung 34 aus dem Behälter 33 anzusaugen und in den Sammelbehälter 31 zu befördern. Die danach angesaugte gebrauchte Waschlösung aus der Waschstation 11 gelangt über den Schlauch 30 in den Sammelbehälter 31, wo sich bereits eine ausreichende Menge Entschäumer-Lösung 34 befindet, die die Schaumbildung im Sammelbehälter 31 wirksam verhindert. Durch die Vermeidung von Schaumbildung im Sammelbehälter 31 ist die zuverlässige Bestimmung des Füllstands mittels einer kapazitiven Füllstandsensorfolie 37, die an dem Sammelbehälter 31 angebracht ist, gewährleistet.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Messeinheit
- 11: Waschstation
- 20: Steuereinheit

- 30: Schlauch
- 31: Sammelbehälter
- 32: Vakuum-Pumpe
- 33: Behälter
- 34: Entschäumer-Lösung
- 35: Schlauch
- 36: Sperrventil
- 37: Füllstandsensor

## Patentansprüche

1. Automatisches Analysegerät (1) mit mindestens einer Pipettiervorrichtung (3, 9) mit einer Pipettiernadel und mit mindestens einer Waschstation (11) für Pipettiernadeln, wobei die Waschstation (11) mit einem Sammelbehälter (31) zum Sammeln von gebrauchter Waschlösung verbunden ist, **dadurch gekennzeichnet, dass** ein weiterer Behälter (33) zum Lagern einer Entschäumer-Lösung (34) vorgesehen ist, der über eine steuerbare Dosiervorrichtung (36) mit dem Sammelbehälter (31) verbunden ist.

2. Automatisches Analysegerät (1) gemäß Anspruch 1, wobei die steuerbare Dosiervorrichtung eine Pumpe ist.

3. Automatisches Analysegerät (1) gemäß Anspruch 1, wobei der Sammelbehälter (31) an eine Vakuumpumpe (32) angeschlossen ist, die ein Vakuum im Sammelbehälter (31) erzeugt und wobei die steuerbare Dosiervorrichtung ein Sperrventil (36) ist.

4. Automatisches Analysegerät (1) gemäß einem der vorhergehenden Ansprüche, wobei der Behälter (33) zum Lagern der Entschäumer-Lösung (34) einen Entschäumer aus der Gruppe Silikonöle, Tributylphosphat und Triisobutylphosphat enthält.

5. Automatisches Analysegerät (1) gemäß einem der vorhergehenden Ansprüche, wobei zur Bestimmung des Füllstands des Sammelbehälters (31) ein kapazitiver Füllstandsensor (37) vorgesehen ist.

6. Automatisches Analysegerät (1) gemäß einem der vorhergehenden Ansprüche, ferner umfassend eine Steuereinrichtung, wobei die Steuereinrichtung so konfiguriert ist, dass sie ein Verfahren mit den folgenden Schritten steuert:
• Befüllen der Waschstation (11) mit einer Waschlösung und Waschen der Pipettiernadel;
• Befördern der gebrauchten Waschlösung in den Sammelbehälter (31),
wobei vor dem Befördern der gebrauchten Waschlösung in den Sammelbehälter (31) zunächst die Dosiervorrichtung (36) betätigt wird, um eine Teilmenge der Entschäumer-Lösung (34) aus dem Behälter (33) zum Lagern der Entschäumer-Lösung (34) in den Sammelbehälter (31) zu befördern.

7. Automatisches Analysegerät (1) gemäß Anspruch 6, wobei vor jedem Befördern einer gebrauchten Waschlösung in den Sammelbehälter (31) zunächst die Dosiervorrichtung (36) betätigt wird, um eine Teilmenge der Entschäumer-Lösung (34) aus dem Behälter (33) zum Lagern der Entschäumer-Lösung (34) in den Sammelbehälter (31) zu befördern.
